# EUROPÄISCHE PATENTSCHRIFT

(11) **EP 0 618 857 B1**
(45) Veröffentlichungstag und Bekanntmachung des Hinweises auf die Patenterteilung: **17.07.1996**
(21) Anmeldenummer: 92907528.1
(22) Anmeldetag: 18.03.1992
(51) Int. Cl.: B29C 45/14, B29C 45/42

(54) **VERFAHREN UND VORRICHTUNG ZUM SPRITZGIESSEN VON KUNSTSTOFFBECHERN**
PROCESS AND DEVICE FOR INJECTION MOULDING PLASTIC POTS
PROCEDE ET DISPOSITIF DE MOULAGE PAR INJECTION POUR LA FABRICATION DE GOBELETS EN MATIERE PLASTIQUE

(30) Priorität: 17.12.1991 DE 4141644
(43) Veröffentlichungstag der Anmeldung: 12.10.1994
(73) Patentinhaber: SYSTEC ENGINEERING KNAUER GMBH & CO. KG, D-72574 Bad Urach (DE)
(72) Erfinder: DÖBLER, Walter, D-7432 Bad Urach-Seeburg (DE)
(74) Vertreter: Grünecker, Kinkeldey, Stockmair & Schwanhäusser Anwaltssozietät
(86) Internationale Anmeldenummer: EP9200594
(87) Internationale Veröffentlichungsnummer: WO9311923

(56) Entgegenhaltungen:
- EP-A- 0 380 177
- EP-A- 0 415 153
- FR-A- 2 454 970
- US-A- 3 869 234
- US-A- 4 368 018

## Beschreibung

Die Erfindung betrifft ein Spritzgießverfahren zum Herstellen eines Kunststoffbechers mit einer nach dem Inmould-Labelling-Verfahren in diesen integrierten etikettförmigen Hüllfolie mit folgenden Verfahrensschritten:
- Aufnehmen einer Hüllfolie mittels eines Saughaltedorns für das Einlegen der Hüllfolie für einen nachfolgenden Spritzgießvorgang in eine Matrize;
- Öffnen einer Spritzgußform durch Auseinanderfahren der Matrize und einer Patrize in eine Öffnungsstellung, wobei während der Öffnungsbewegung ein gesteuerter Positionierarm den Saughaltedorn in eine Lage koaxial zu der Patrize und Matrize in einen durch Auseinanderfahren der Patrize und Matrize dazwischen entstehenden Zwischenraum hineinbewegt;
- Abnehmen des zuvor hergestellten Kunststoffbechers von der Patrize;
- Einlegen der Hüllfolie von dem Saughaltedorn in die Matrize;
- koaxiales Ineinanderbewegen der Patrize und der Matrize bis zum erneuten Ausbilden einer geschlossenen Spritzgußform, wobei durch die Schließbewegung der gesteuerte Positionierarm den Saughaltedorn aus dem aufgrund der Schließbewegung verschwindenden Zwischenraum zwischen der Patrize und Matrize herausbewegt;
- Einspritzen von Kunststoffschmelze in die geschlossene Spritzgußform.

Daneben betrifft die Erfindung eine Spritzgießvorrichtung zum Durchführen des vorgenannten Spritzgießverfahrens, mit einer Patrize und einer koaxial zur Ausbildung einer geschlossenen Spritzgußform über die Patrize bewegbaren Matrize; mit einer Spritzdüse für das Einspritzen von Kunststoffschmelze in die geschlossene Spritzgußform, mit einem einen Saughaltedorn tragenden Positionierarm, wobei der Saughaltedorn einen für das Einlegen der Hüllfolie in die Matrize ausgebildeten Einlegeteil aufweist, wobei die Matrize und der Einlegeteil jeweils mit einer für das Festhalten der Hüllfolie ausgebildeten Halteeinrichtung versehen sind; einer für das Zusammenbewegen und Auseinanderbewegen der Patrize und Matrize ausgebildeten Antriebseinrichtung; einer Antriebseinrichtung mit einer Steuerung für das gesteuerte Hinein- und Herausbewegen des Positionierarms in einen durch Auseinander- bzw. Zusammenbewegen von Matrize und Patrize entstehenden bzw. verschwindenden Zwischenraum.

Das bereits bekannte Inmould-Labelling-Verfahren wird bei Kunststoffbechern aller Art angewendet, beispielsweise bei Joghurtbechern, wobei die vor dem Einfüllen von Kunststoffschmelze in die Spritzgußform eingebrachte Hüllfolie vorzugsweise aus dem gleichen oder ähnlichem Kunststoff wie die Kunststoffschmelze hergestellt ist und bei dem Spritzgießvorgang mit der in die Spritzgußform eingespritzten Kunststoffschmelze verschmilzt, so daß die Hüllfolie bei dem fertigen Kunststoffbecher einen integralen Bestandteil der Becherwand bildet.

Das Inmould-Labelling-Verfahren hat den besonderen Vorteil, daß auf diese Weise Hüllfolien, welche Etiketten mit hoher Druckqualität darstellen, auf einfache Weise in den Kunststoffbecher integrierbar sind. Eine derartige Druckqualität läßt sich bei nachträglichem Bedrucken eines ansonsten bereits fertig hergestellten Kunststoffbechers drucktechnisch schon aufgrund der räumlichen Gestaltung des Bechers nicht verwirklichen.

Ein wesentliches Problem beim Inmould-Labelling-Verfahren liegt darin, in die Matrize eine Hüllfolie für den nachfolgenden Spritzgießvorgang einzulegen. Dieser Vorgang muß einerseits sehr zeitsparend und andererseits mit ausreichender Genauigkeit erfolgen, damit die Hüllfolie in der gewünschten Lage in der Matrize zu liegen kommt. Dabei muß für die Spritzgießvorrichtung eine möglichst einfache Konstruktion mit entsprechend einfachen Bewegungsabläufen realisiert werden, um einen störungsfreien Herstellungsablauf mit einer kurzen Zykluszeit verwirklichen zu können.

Aus der EP-A-0 415 153 A2 ist eine Einlegevorrichtung für die Hüllfolie bekannt, bei welcher ein Saughaltedorn mit einer zuvor aufgenommenen Hüllfolie in die Matrize hineinfährt und die Hüllfolie durch Abblasen in die Matrize abgibt, wo sie mittels Unterdrucköffnungen angesaugt und bis zum Hineinfahren der Patrize in die Matrize festgehalten wird. Darüberhinaus ist in der PCT/EP 91/00592 beschrieben, wie die Unterdrucköffnung in Form eines Saugspalts gestaltet werden kann.

Die Konstruktion nach der EP-A-0 415 153 A2 bringt jedoch den Nachteil mit sich, daß sie relativ kompliziert ist und der Saughaltedorn längs einer relativ komplizierten Bewegungsbahn verschoben werden muß.

Die Erfindung löst die Aufgabe, ein Spritzgießverfahren und eine Spritzgießvorrichtung der eingangs erwähnten Art zu schaffen, wobei bei einer einfachen Konstruktion mit einfachen Bewegungsabläufen ein präzises und schnelles Einlegen der Hüllfolie ermöglicht wird.

Diese Aufgabe wird durch das erfindungsgemäße Spritzgießverfahren gelöst, bei welchem für das Einlegen der Hüllfolie zumindest ein Teil der Matrize aus deren Öffnungsstellung in Richtung des Saughaltedorns koaxial zu diesem vorbewegt wird, die Hüllfolie von dem Saughaltedorn in den vorbewegten Teil der Matrize eingelegt wird, und der vorbewegte Teil der Matrize wieder in deren Öffnungsstellung zurückbewegt wird.

Zum Durchführen des erfindungsgemäßen Spritzgießverfahrens ist eine erfindungsgemäße Spritzgießvorrichtung vorgesehen, bei welcher die Matrize in mindestens zwei Teile teilbar ist, wovon mindestens ein vorbewegbarer Teil längs einer Führung koaxial in Richtung zu der Patrize zu dem Saughaltedorn hin und wieder zurück in die Öffnungsstellung der Matrize schiebbar ist, während der Saughaltedorn in seiner der Matrize und Patrize koaxialen Lage verbleibt.

Ein wesentlicher Vorteil der Erfindung ist darin zu sehen, daß die Bewegungsbahn des Saughaltedorns nicht derart verlaufen muß, daß die Bewegungsbahn wie nach dem Stand der Technik schließlich im wesentlichen koaxial zu einer momentan ortsfesten Matrize in diese hineinführt, weil erfindungsgemäß der vorbewegbare Matrizenteil zu dem Saughaltedorn hinbewegt wird und die Hüllfolie dort abholt. Aus diesem Grund läßt sich die erfindungsgemäße Bewegungsbahn relativ frei wählen, daß sie lediglich in eine der Matrize koaxiale Stellung, jedoch nicht in diese hinein führt, bevor erfindungsgemäß der vorbewegte Matrizenteil die Hüllfolie von dem Saughaltedorn abholt. Dies vereinfacht die mechanische Konstruktion der Spritzgießvorrichtung sowie die Bewegungsabläufe des erfindungsgemäßen Spritzgießverfahrens wesentlich.

Gemäß einer vorteilhaften Ausgestaltung der Erfindung wird für das Aufnehmen der Hüllfolie der vorbewegte Teil der Matrize zumindest über einen Teilbereich des Saughaltedorns geschoben. Durch Schieben des vorbewegten Matrizenteils über zumindest einen Teilbereich des Saughaltedorns ist eine besonders präzise Übergabe der Hüllfolie von dem Saughaltedorn in die Matrize gewährleistet.

Gemäß einer vorteilhaften Weiterbildung der Erfindung wird die Hüllfolie von dem Saughaltedorn in den vorbewegten Teil der Matrize durch Abblasen von dem Saughaltedorn abgegeben und von der Matrize durch Anlegen eines Unterdrucks auf der Innenoberfläche des vorbewegten Teils der Matrize aufgenommen und gehalten. Dabei wird vorteilhaft der Unterdruck auf der Innenoberfläche des vorbewegten Teils der Matrize über einen den vorbewegten Teil der Matrize in zwei Hälften teilenden und im wesentlichen quer zur Bewegungsrichtung des vorbewegten Teils verlaufenden Saugspalt angelegt, wobei die beiden Hälften bei unbelastetem vorbewegtem Teil der Matrize durch eine Federkraft für das Öffnen des Saugspalts auseinandergetrieben werden und bei geschlossener Spritzgußform durch Aufbringen einer Schließkraft auf die Matrize gegen die Federkraft zusammengedrückt werden, wodurch der Saugspalt wieder geschlossen wird.

Die entsprechende erfindungsgemäße Spritzgießvorrichtung ist vorteilhaft derart gestaltet, daß der vorbewegbare Teil der Matrize längs eines im wesentlichen quer zur Bewegungsrichtung der Matrize verlaufenden Saugspalts in zwei Hälften geteilt ist, wobei in dem Saugspalt ein Federelement angeordnet ist, welches im unbelasteten Zustand der Matrize die beiden Hälften des vorbewegbaren Teils auseinandertreibt und den Saugspalt so öffnet. Dabei ist vorteilhaft das Federelement als ein O-Ring ausgestaltet, welcher in einer entsprechenden, in beiden Hälften des vorbewegbaren Teils der Matrize ausgebildeten Ringnut aufgenommen ist, wobei die Ringnut eine derartige Größe aufweist, daß bei vollständig geschlossener Spritzgußform und damit einhergehendem vollständigem Aufeinanderpressen der beiden Hälften der O-Ring in der Ringnut Platz findet.

Obgleich es möglich ist, anstatt des Saugspalts andersartige Unterdrucköffnungen wie Saugbohrungen vorzusehen, läßt sich durch den Saugspalt in einfacher Weise verwirklichen, eine Saugöffnung zu schaffen, welche den gesamten Umfang der Matrize erfaßt und damit ein sicheres Ansaugen der Hüllfolie verwirklicht. Darüberhinaus läßt sich der Saugspalt durch Hineinfahren der Patrize in die Matrize und anschließendes Zusammenpressen von Patrize und Matrize leicht schließen. Ein Saugspalt ist bereits in der eingangs erwähnten PCT/EP 91/00592 beschrieben, jedoch ist in dieser Druckschrift kein für die Erfindung wesentlicher vorbewegbarer Teil der Matrize erwähnt.

Obgleich als Federelement für das Auseinandertreiben der beiden Hälften des vorbewegbaren Teils der Matrize jedes beliebige Federelement aus elastischem Kunststoff- oder Gummimaterial sowie aus Metall wie Schrauben-, Teller- oder Blattfedern verwendet werden können, ist die Ausbildung des Federelements als O-Ring besonders vorteilhaft, da solche Ringe im Handel erhältlich sind und zugleich ein zusätzliches dichtes Verschließen des Saugspalts gewährleisten.

Nach einer besonders vorteilhaften Ausführungsform ist der Saughaltedorn als Kombistempel ausgebildet und wird auch zur Abnahme des fertiggespritzten Bechers verwendet, wenn sich der Saughaltedorn in koaxialer Lage zu der Patrize und zu der Matrize befindet. Dabei weist dieser Kombistempel erfindungsgemäß einen für die Entnahme eines soeben hergestellten Kunststoffbechers ausgebildeten Entnahmeteil und einen für das Einlegen der Hüllfolie in die Matrize ausgebildeten Einlegeteil auf, wobei der Entnahmeteil und der Einlegeteil koaxial aneinander befestigt sind. Mit dieser vorteilhaften Weiterbildung des erfindungsgemäßen Spritzgießverfahrens und der entsprechenden Spritzgießvorrichtung läßt sich ein schnelleres Ausgeben des Kunststoffbechers bei gleichzeitigem Einlegen der Hüllfolie in die Matrize für den darauffolgenden Spritzgießvorgang erreichen. Dabei ist die Konstruktion der Vorrichtung vereinfacht, da nur ein einziger Saughaltedorn von der Öffnungs- bzw. Schließbewegung der Spritzgußform gesteuert wird, d.h. von der Auseinander- bzw. Aufeinanderzubewegung von Matrize und Patrize, wobei das gleichzeitige Aufnehmen des soeben hergestellten Bechers und das Einlegen der Hüllfolie in die Matrize auch bei einem relativ kleinen Öffnungsraum, d.h. Zwischenraum zwischen der Matrize und Patrize, erfolgen kann, weil keine Kollision wie beispielsweise im Falle eines separaten Entnahme- und Einlegestempels vermieden werden muß. Durch den kleinen Öffnungsraum und die damit verbundene kleine Öffnungsbewegung der Matrize relativ zu der Patrize bei miteinander kombiniertem, gleichzeitigem Entladen und Einlegen läßt sich der Entlade-Einlege-Verfahrensschritt weiter verkürzen und damit die Zykluszeit weiter verringern.

Darüberhinaus wird die Konstruktion der erfindungsgemäßen Spritzgießvorrichtung weiter vereinfacht, weil nur ein Stempel, nämlich der als kombinierter Entnahme- und Einlegedorn ausgebildete Kombistempel vorhanden ist, der mit nur einer gesteuerten Antriebsvorrichtung in den zwischen Matrize und Patrize entstehenden Zwischenspalt hineinbewegt werden muß.

Gemäß einer vorteilhaften Weiterbildung des vorerwähnten, als Kombistempel ausgestalteten Saughaltedorns sind die Halteeinrichtungen für den Kunststoffbecher an der Patrizenoberfläche bzw. der Entnahmeteiloberfläche des Saughaltedorns ausmündende Öffnungen, die mit einer Unterdruckquelle verbunden sind. Mit der vorgenannten Ausführungsform der erfindungsgemäßen Spritzgießvorrichtung kann vorteilhaft der auf der Patrize befindliche, soeben hergestellte Kunststoffbecher an den in die koaxiale Lage zu der Patrize hineinbewegten Saughaltedorn durch Abblasen des Kunststoffbechers von der Patrize in Richtung des Saughaltedorns abgegeben werden und von dem Saughaltedorn durch einen auf einer Teiloberfläche desselben angelegten Unterdruck aufgenommen werden, wobei der Unterdruck auf den Boden des soeben hergestellten Kunststoffbechers einwirkt, wobei darüberhinaus vorteilhaft der soeben hergestellte Kunststoffbecher schließlich von dem Saughaltedorn in der vollständig aus dem Zwischenraum zwischen Matrize und Patrize herausbewegten Lage des Positionierarms durch Abblasen ausgegeben wird. Der besondere Vorteil dabei ist, daß das Festhalten des Kunststoffbechers mit Unterdruck leicht zu verwirklichen und zeitlich zu steuern ist. Dabei können die Unterdrucköffnungen gleichzeitig zum Zuführen von Druckluft dienen, um den Becher an der gewünschten Stelle abblasen zu können. Durch das Abblasen kann der soeben hergestellte Kunststoffbecher auch ein Stück in Richtung zu dem Saughaltedorn gefördert werden, womit eine Bewegung eingespart werden kann, gemäß welcher der Entnahmeteil des Saughaltedorns ansonsten für das Aufnehmen des Bechers über die Patrize gefahren werden müßte.

Trotz der zuvor genannten Vorteile der Ausgestaltung der Halteeinrichtungen als Unterdruck- oder Saugeinrichtungen ist es jedoch ohne weiteres möglich, die Halteeinrichtungen als herkömmliche mechanische Spanneinrichtungen zu gestalten, wobei beispielsweise von der Patrize radial nach außen bewegbare Spannelemente vorgesehen sein können, die gegen die Innenwand des soeben hergestellten Bechers spannbar sind, wie anschaulich gesagt beispielsweise die Meßflächen einer Innenmikrometerschraube gegen die Wand einer Bohrung zum Anliegen gebracht werden. Es ist jedoch auch möglich, den flexiblen Kunststoffbecher mittels von außen auf diesen drückenden Spannhebeln zu halten oder einfach einen oberen Rand des auf der Matrize befindlichen Bechers mit Haken zu hintergreifen. Entsprechend können die Halteeinrichtungen des Entnahmeteils des Saughaltedorns ausgebildet sein.

Gemäß einer anderen vorteilhaften Weiterbildung der Erfindung wird der Saughaltedorn durch eine über die Öffnung- und Schließbewegung zwangsgesteuerte Schwenkbewegung in die der Patrize und Matrize koaxiale Lage ein- bzw. ausgeschwenkt. Dies wird mit der erfindungsgemäßen Spritzgießvorrichtung dadurch verwirklicht, daß der Positionierarm ein Schwenkarm ist, der an seinem einen Ende um eine Schwenkachse schwenkbar gelagert ist und an seinem anderen, freien Ende den Saughaltedorn trägt. Dabei ist vorteilhaft die Antriebseinrichtung mit der Steuerung für den Positionierarm eine durch das Zusammenbewegen und Auseinanderbewegen der Patrize und Matrize mitbewegte Kurvenscheibe, welche mit einem Laufrad zusammenwirkt, das mit einer Zahnstange verbunden ist, die ihrerseits mit einem Zahnrad kämmt, welches seinerseits mit dem Positionierarm starr verbunden und mit diesem zusammen um die Schwenkachse des Positionierarms drehbar ist.

Obgleich die Kurvensteuerung gleichzeitig den Vorteil eines rotativen Antriebs des Schwenkarms in Verbindung mit einer leicht und kostengünstig verwirklichbaren Steuerung hat, ist es jedoch auch ohne weiteres möglich, anstatt einer Kurvensteuerung einen eigenen Antrieb, beispielsweise in Form eines gesteuerten Schrittmotors, für den Schwenkarm vorzusehen und beispielsweise die Schwenkbewegung mittels eines Ausgangssignals eines Sensors zu steuern, welcher den Abstand zwischen der Patrize und der Matrize signalisiert.

Anstatt eines Schwenkarms kann auch ein Teleskoparm für das Hinein- und Hinausbewegen des Saughaltedorns in den Zwischenraum vorgesehen sein, der ebenfalls kurvengesteuert ist oder beispielsweise ein von dem vorgenannten Sensor gesteuerter hydraulischer Teleskoparm ist.

Gemäß einer anderen vorteilhaften Weiterbildung ist die Patrize stets ortsfest und die Matrize wird auf die Patrize zu bzw. von dieser wegbewegt. Dazu ist die Patrize ortsfest mit einem Gestell der Spritzgießvorrichtung verbunden und die Antriebseinrichtung für das Zusammenbewegen und Auseinanderbewegen der Matrize und Patrize derart ausgebildet, daß mittels dieser Antriebseinrichtung die Matrize auf die Patrize zubewegbar ist. Dies hat den Vorteil, daß nur die Matrize längs einer Führung linear verschiebbar sein muß, was den Antriebs- und Führungsaufwand verringert und das Arbeitsverfahren des simultanen Entladens und Einlegens vereinfacht.

Dabei ist für den kombinierten Entlade-Einlege-Verfahrensschritt nur eine Schwenkbewegung des Schwenkarms und eine Linearbewegung der gesamten Matrize sowie eine Linearbewegung des vorbewegten Matrizenteils auf den in die zur Matrize koaxiale Lage geschwenkten Saughaltedorn zu bzw. nach Aufnehmen der Hüllfolie von diesem weg erforderlich, wodurch die Anzahl der Verfahrensschritte auf ein Minimum beschränkt ist und die Spritzvorrichtung eine sehr einfache Konstruktion aufweist. Anstatt nur eines Teils der Matrize kann zum Aufnehmen der Hüllfolie auch die gesamte Matrize über den Saughaltedorn und entsprechend zurück geschoben werden.

Die Erfindung wird nachfolgend anhand bevorzugter Ausführungsbeispiele unter Bezugnahme auf die Zeichnung erläutert. In der Zeichnung zeigen:
Fig. 1 eine schematische Draufsicht einer Ausführungsform der Spritzgießmaschine;
Fig. 2 eine vereinfachte Darstellung einer Teildraufsicht auf die Spritzgießmaschine mit der Matrize, Patrize und dem Saughaltedorn bei vollständig geschlossener Spritzgußform;
Fig. 3 eine Darstellung gemäß Fig. 2 in halb auseinandergefahrener Lage der Spritzgußform mit entsprechend halb in den entstehenden Zwischenraum zwischen Matrize und Patrize eingeschwenktem Saughaltedorn;
Fig. 4 eine Darstellung gemäß Fig. 2 in vollständig auseinandergefahrener Lage der Spritzgußform mit entsprechend vollständig in den entstandenen Zwischenraum zwischen Matrize und Patrize eingeschwenktem Saughaltedorn, wobei der vorbewegbare Teil der Matrize über einen Teilbereich des Saughaltedorns gefahren wurde;
Fig. 5 eine Draufsicht auf die Antriebseinheit für den Schwenkarm; und
Fig. 6 eine detaillierte Draufsicht auf die Spritzgußform mit Einspritzdüse und entsprechenden Zuführkanälen für Kunststoffschmelze.

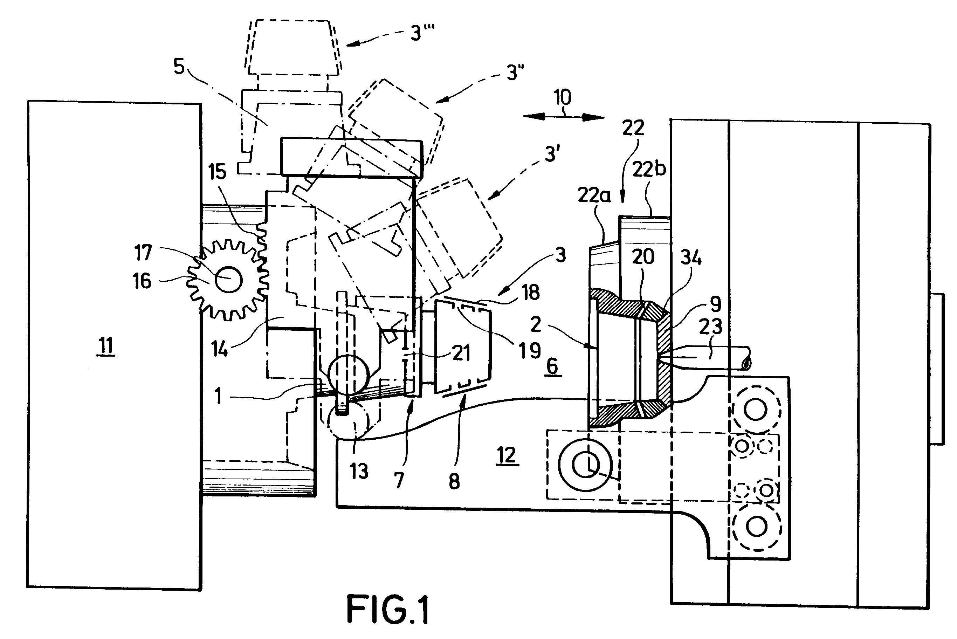

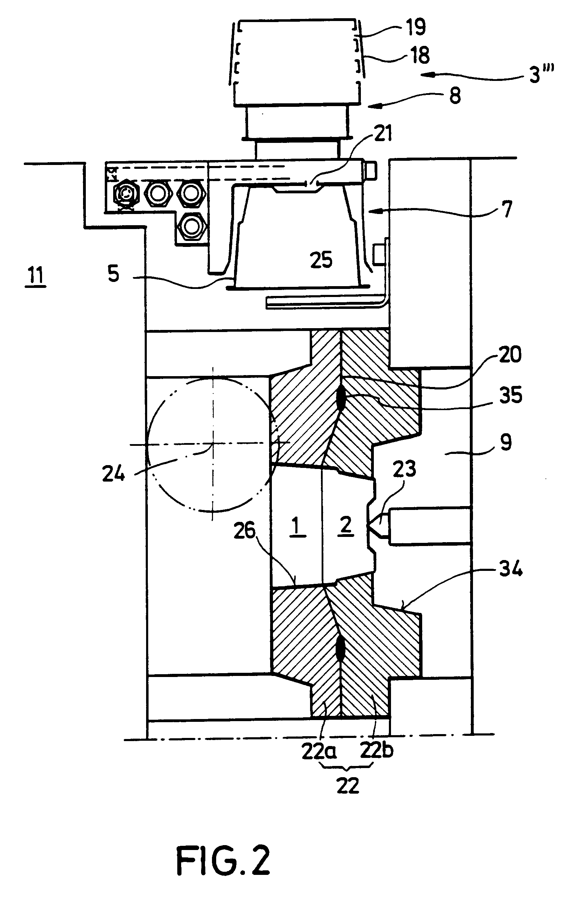

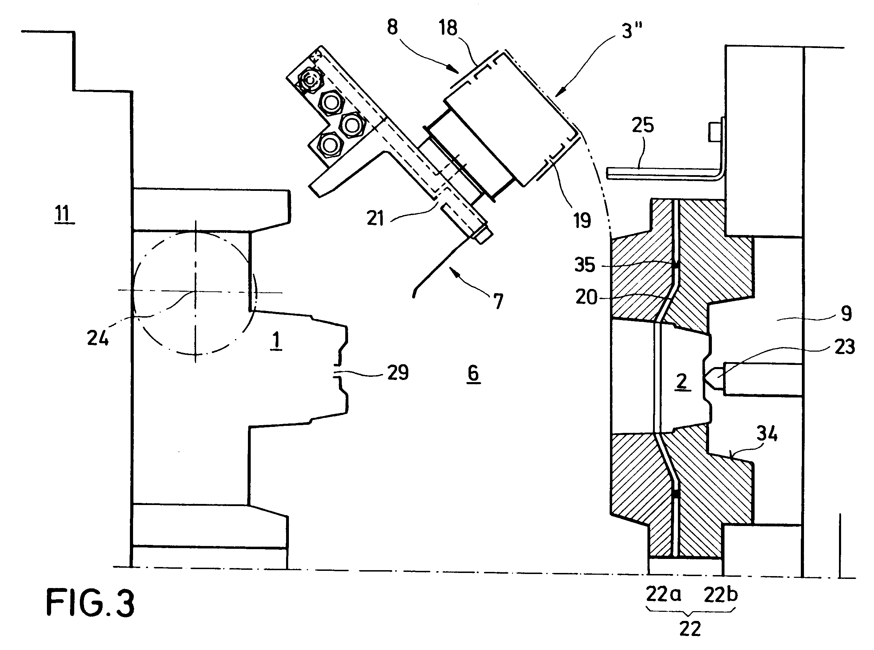

Aus Fig. 1 ist die Patrize 1 und die Matrize 2 ersichtlich, welche koaxial ineinander geschoben werden bzw. auseinandergefahren werden können. Fig. 1 zeigt die auseinandergefahrene Stellung von Patrize 1 und Matrize 2, wobei sich der vorbewegbare Teil 22, welcher längs eines in Fig. 1 nur angedeuteten und in Fig. 2 und 3 besser erkennbaren Trennspalts 34 von einem Basisteil 9 trennbar ist, in einer Richtung zu dem Saughaltedorn 3 hin bewegbar ist.

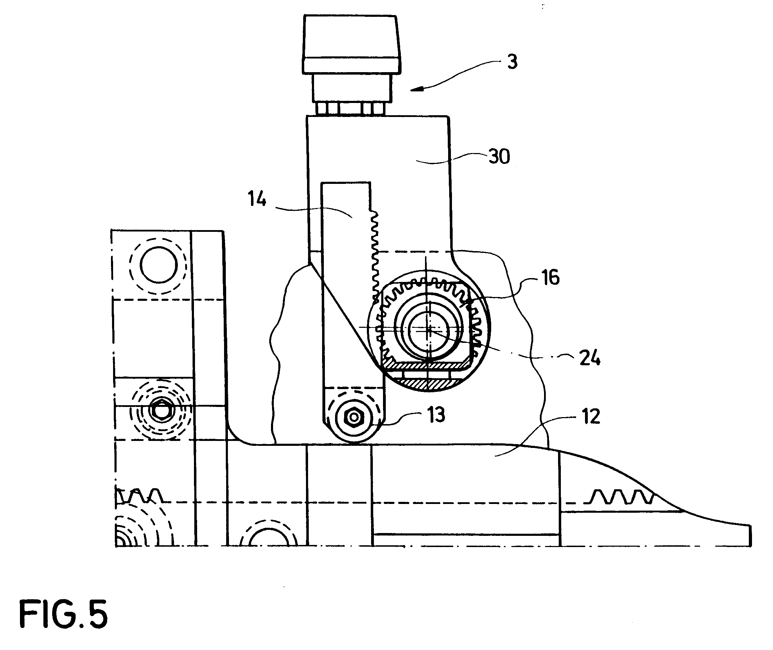

Der Saughaltedorn 3 ist auf seiner einen Seite mit einem Entnahmeteil 7 zum Aufnehmen eines soeben hergestellten Kunststoffbechers 5 von der Patrize 1 ausgebildet. Der Saughaltedorn 3 mit einem von diesem getragenen Kunststoffbecher 5 ist in gestrichelten strichpunktierten Linien in verschiedenen Stellungen 3', 3'' und 3''' dargestellt, die sich durch Ein- bzw. Ausschwenken des in Fig. 5 dargestellten Schwenkarms 30 in den zwischen der Matrize 2 und der Patrize 1 entstehenden Zwischenraum 6 bzw. aus dem sich dazwischen allmählich verkleinernden Zwischenraum 6 heraus ergeben.

Der Saughaltedorn 3 ist mit dem Entnahmeteil 7 zum Transportieren des soeben hergestellten Kunststoffbechers 5 und mit einem Einlegeteil 8 zum Einlegen einer Hüllfolie 18 in die Matrize 2 versehen.

Bei der in Fig. 1 dargestellten Ausführungsform ist die gesamte Matrize 2, welche im wesentlichen aus dem separat vorbewegbaren Teil 22 der Matrize 2 und dem Basisteil 9 in Form des Matrizenbodens besteht, wie von dem Pfeil 10 angedeutet in Richtung der Patrize 1 verschiebbar. Der Antrieb erfolgt mittels nicht dargestellter Antriebsmittel, beispielsweise mittels eines gesteuerten Elektromotors oder Schrittmotors sowie eines hydraulischen oder pneumatischen Zylinders. Die Patrize 1 ist gemäß dieser Ausführungsform starr an einem Patrizengestell 11 befestigt, welches ortsfest ist.

Mit der gesamten Matrize 2 ist eine Kurvenscheibe 12 verbunden, welche mit der Matrize 2 zusammen in Richtung des Patrizengestells 11 bzw. von diesem weg verschiebbar ist. Die Kurvenscheibe 12 wirkt mit einem Laufrad 13 zusammen, welches seinerseits mit einem Zahnstangenkörper 14 verbunden ist. Die Zähne 15 des Zahnstangenkörpers 14 kämmen mit einem Zahnrad 16, welches auf einem Lagerbolzen 17 drehbar gelagert ist. Das Zahnrad 16 ist mit dem vorerwähnten, in Fig. 5 nicht dargestellten Schwenkarm verbunden, der seinerseits mit dem Saughaltedorn 3 an seinem freien Ende fest verbunden ist.

Durch das Bewegen der gesamten Matrize 2 auf die Patrize 1 zu bzw. von dieser weg wird mittels der Kurvenscheibe 12, des Laufrads 13, des Zahnstangenkörpers 14, des Zahnrads 16 und des Positionierarms 30 in Form des Schwenkarms der Saughaltedorn 3 zwangsgesteuert in der entstehenden bzw. verschwindenden Zwischenraum 6 zwischen der Matrize 2 und der Patrize 1 eingeschwenkt bzw. aus diesem Zwischenraum 6 wieder herausgeschwenkt, wobei der Saughaltedorn 3 in seiner vollständig eingeschwenkten Lage mit seinem Entnahmeteil 7 und seinem Einlegeteil 8 koaxial zu der Patrize 1 bzw. Matrize 2 ist. Die vorerwähnte Anordnung kann unter dem Begriff Antriebseinrichtung des Schwenkarms zusammengefaßt werden und ist auch detailliert in Fig. 5 dargestellt.

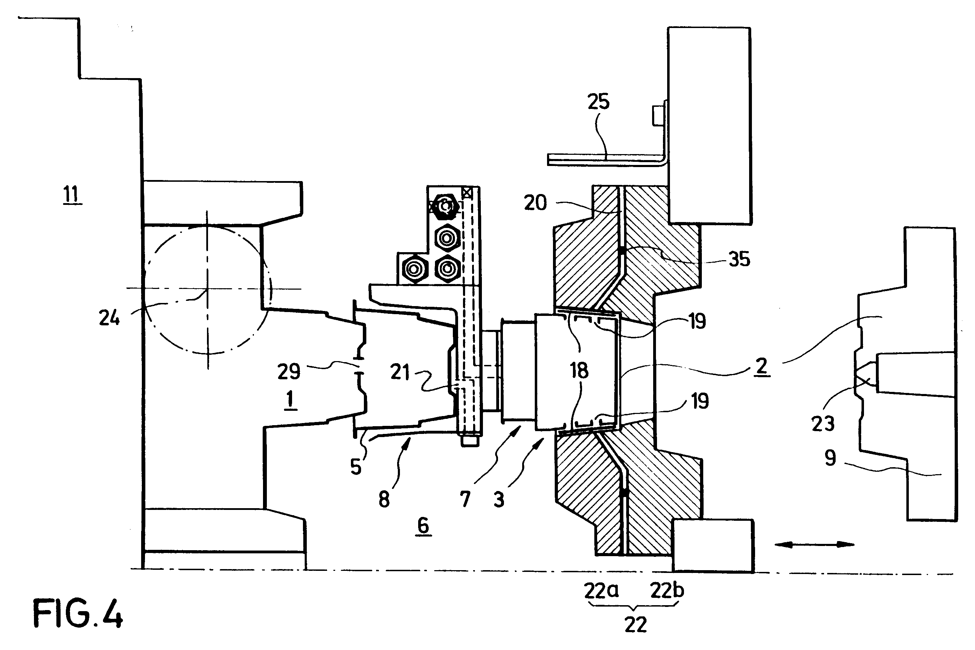

Hat der Saughaltedorn 3 die vorgenannte koaxiale Lage erreicht, wird der vorbewegbare Teil 22 der Matrize 2 längs des Trennspalts 34 von dem Basisteil 9 der Matrize 2 gelöst und der vorbewegbare Teil 22 wird über den Einlegeteil 8 des Saughaltedorns 3 geschoben. Eine solche Stellung ist in der weiter unten noch näher erläuterten Fig. 4 dargestellt. Bei der Bewegung des vorbewegbaren Teils 22 der Matrize 2 über den Einlegeteil 8 bleibt der Saughaltedorn 3 in seiner der Matrize 2 und Patrize 1 koaxialen Lage.

Wenn der vorbewegbare Teil 22 der Matrize 2 über einen entsprechenden Teilbereich des Einlegeteils 8 des Saughaltedorns 3 geschoben ist, wird die bislang auf dem Einlegeteil 8 über Unterdrucköffnungen 19 festgehaltene Hüllfolie 18 durch Abblasen an die Matrize 2 abgegeben und dort mittels Unterdruck aufgenommen und festgehalten, wobei der Unterdruck an dem Saugspalt 20 angelegt ist, der den vorbewegbaren Teil 22 der Matrize 2 in zwei Hälften 22a und 22b teilt. Der Saugspalt 20 wird anhand der Fig. 2 bis 4 weiter unten noch näher erläutert.

Zur gleichen Zeit oder bereits vorher wurde der noch auf der Patrize 1 steckende, soeben hergestellte Kunststoffbecher 5 in Richtung zu dem Entnahmeteil 7 des Saughaltedorns 3 hin abgeblasen und durch diesen Abblasvorgang über eine kleine Wegstrecke zu dem Entnahmeteil 7 hin befördert. Der Entnahmeteil 7 ist mit dem Boden des Bechers 5 gegenüberliegenden Unterdrucköffnungen 21 versehen, mittels welchen der Becher 5 gegen den Entnahmeteil 7 angesaugt und so festgehalten wird.

Nach dem Aufnehmen der Hüllfolie 18 fährt der vorbewegbare Teil 22 der Matrize wieder in seine Ausgangsstellung zurück und vereinigt sich dort mit dem Basisteil 9 zu der gesamten Matrize 2, die sich zu diesem Zeitpunkt in ihrer äußersten Öffnungsstellung befindet, d.h. in derjenigen Stellung, in welcher sie am weitesten von der Patrize 1 entfernt ist.

Beim Zurückbewegen des vorbewegbaren Teils 22 führt der Schwenkarm 30 ebenfalls keine Schwenkbewegung aus, weshalb der vorbewegbare Teil 22 der Matrize 2 längs der dem Saughaltedorn 3 und der Patrize 1 koaxialen Richtung von dem Saughaltedorn 3 wegbewegt wird. Beim Zusammenfahren der gesamten Matrize 2 und der Patrize 1 zu einer geschlossenen Spritzgußform wird der Saughaltedorn 3 aus dem dabei verschwindenden Zwischenraum 6 zwischen der Matrize 2 und Patrize 1 herausgeschwenkt.

In der Endlage 3''' dieser Herausschwenkbewegung wird der zuvor fertig hergestellte Becher 5 von dem Entnahmeteil 7 abgeblasen und kann beispielsweise zum Befüllen oder zum Verpacken weitertransportiert werden.

Mit der Endlage der Herausschwenkbewegung des Positionierarms 30 geht auch gleichzeitig diejenige Lage einher, in welcher die Spritzgußform vollständig geschlossen ist, d.h. bereit ist für das Einspritzen von Kunststoffschmelze in die Matrize 2 mittels der schematisch dargestellten Einspritzdüse 23 durch eine Öffnung im Basisteil 9 der Matrize 2. Zuvor wurde der Unterdruck zum Halten der Hüllfolie 18 in der Matrize 2 abgestellt und der Saugspalt 20 geschlossen, was bei dieser Ausführungsform durch Zusammenpressen der beiden Hälften 22a und 22b gegen eine Federkraft verwirklicht wird. Als Kraft für das Schließen des Saugspalts 20 dient die Schließkraft für die Spritzgießform, welche die gesamte Matrize 2 gegen die Patrize 1 anpreßt.

Während des Einspritzvorgangs wird von dem Einlegeteil 8 des Saughaltedorns 3 eine neue, aus einem nicht dargestellten Zuführschacht zugeführte Hüllfolie 18 aufgenommen und mittels der mit einer Unterdruckquelle verbundenen Unterdrucköffnungen 19 festgehalten.

Nach dem Erkalten der Kunststoffschmelze wird die Matrize 2 von der Patrize 1 wieder weggefahren, wodurch das Einschwenken des Saughaltedorns 3 in den erneut entstehenden Zwischenraum 6 sowie der gesamte vorgenannte Verfahrensverlauf erneut erfolgt.

Beim Wegfahren der Matrize 2 von der Patrize 1 wird der soeben hergestellte Kunststoffbecher 5 mittels eines an der Patrizenoberfläche über Unterdrucköffnungen 29 (vgl. Fig. 3 und 4) angelegten Unterdrucks festgehalten, bis der Kunststoffbecher 5 wie bereits weiter oben beschrieben in Richtung Entnahmeteil 7 abgeblasen und dabei eine gewisse Weglänge in Richtung des Entnahmeteils 7 befördert wird.

Die Fig. 2 bis 4 zeigen eine zeitliche Abfolge der oben beschriebenen Bewegungsabläufe, wobei Fig. 2 die Lage bei vollständig geschlossener Spritzgußform, Fig. 3 die halb auseinandergefahrene Lage der Matrize 2 relativ zur Patrize 1 mit entsprechend halb in den entstehenden Zwischenraum 6 eingeschwenktem Saughaltedorn 3, und Fig. 4 die Lage bei in die äußerste, von der Patrize 1 weggefahrene Stellung des Basisteils 9 der Matrize 2 mit entsprechend vollständig in den entstandenen Zwischenraum 6 zwischen Matrize 2 und Patrize 1 eingeschwenktem Saughaltedorn 3 zeigt, über dessen Einlegeteil 8 der vorbewegbare Teil 22 der Matrize 2 zwecks Aufnahme der Hüllfolie 18 gefahren ist.

Aus Gründen einer einfacheren Darstellung ist auch in den Fig. 2 bis 4 der Schwenkarm 30 (vgl. Fig. 5) nicht dargestellt, wohl aber die Schwenkachse 24, um welche der Schwenkarm 30 schwenkbar gelagert ist. In der in Fig. 2 dargestellten Lage ist der Becher 5 kurz vor dem Abblasen gegen ein mit dem Basisteil 9 verbundenen Leitblech 25 dargestellt. In dieser Stellung erfolgt wie bereits erwähnt das Einspritzen der Kunststoffschmelze durch den Basisteil 9 der Matrize 2 in den Spalt 26 zwischen der Matrize 2 und der Patrize 1, wobei der Spalt 26 dem späteren Becher 5 entspricht und den Hohlraum der Spritzgußform darstellt.

In der in Fig. 2 dargestellten Stellung ist die Matrize 2 gegen die Patrize 1 angepreßt, wodurch der Saugspalt 20 geschlossen ist, weil durch die Anpreßkraft auch die Hälften 22a und 22b des in den Fig. 2 bis 4 schraffiert dargestellten vorbewegbaren Teils 22 gegeneinander angepreßt werden. Als Federelement 35 ist hier der O-Ring vorgesehen, welcher zusätzlich zu einer Abdichtung beiträgt, obgleich eine ausreichend Abdichtung bereits durch das Aufeinanderpressen der Metallflächen der beiden Hälften 22a und 22b verwirklicht und der Saugspalt 20 so geschlossen wird.

Gezeigt ist auch die Unterdrucköffnung 21 des Entnahmeteils 7, mittels welcher der Becherboden gegen den Entnahmeteil 7 angesaugt wird, bzw. mittels welcher der Becher 5 von dem Entnahmeteil 7 abgeblasen werden kann.

In der in Fig. 3 dargestellten halb geöffneten Lage beginnt der Saughaltedorn 3 in den entstehenden Zwischenraum 6 einzuschwenken. Der Becher 5 wurde zuvor mittels durch die Unterdrucköffnung 21 zugeführter Druckluft gegen das Leitblech 25 abgeblasen und von dort abtransportiert und die Hüllfolie 18 wurde zuvor aus einem Zuführschacht aufgenommen und mittels eines über die Unterdrucköffnungen 19 zugeführten Unterdrucks festgehalten, wobei das Abblasen des fertigen Bechers 5 und Aufnehmen der Hüllfolie 18 für den nächsten Spritzgießvorgang in der in Fig. 2 dargestellten Lage erfolgte.

In Fig. 4 ist die vollständig geöffnete Stellung der Spritzgußform mit über den Einlegeteil 8 des Saughaltedorns 3 gefahrenem vorbewegbaren Teil 22 der Matrize 2 dargestellt, wobei der Basisteil 9 der Matrize 2 den größtmöglichen Abstand zu der Patrize 1 einnimmt.

In dieser Stellung wird die Hüllfolie 18 an die Matrize 2 durch Abblasen über die Öffnungen 19 des Einlegeteils 8 abgegeben, die zuvor als Unterdrucköffnungen 19 zum Festhalten der Hüllfolie 18 genutzt wurde. Von der Matrize 2 wird die Hüllfolie 18 mittels des Saugspalts 20 gehalten, der an eine Unterdruckquelle angeschlossen ist.

Während der vorbewegbare Teil 22 wieder zurück in seine Ausgangsstellung fährt und sich mit dem Basisteil 9 zu der gesamten Matrize 2 wieder vereinigt, wird der zuvor hergestellte Kunststoffbecher 5 von der Patrize 1 mittels der Unterdrucköffnungen 29 in Richtung des Entnahmeteils 7 abgeblasen und so zu diesem hin befördert. Seit dem Auseinanderfahren von Patrize 1 und Matrize 2 wurde der Kunststoffbecher 5 mittels dieser Unterdrucköffnungen 29 durch Unterdruck festgehalten.

In der nun erreichten Lage wird der Becher 5 mittels der Unterdrucköffnung 21 des Entnahmeteils 7 mit Unterdruck festgehalten und die Matrize 2 befindet sich in ihrer am weitesten von der Patrize 1 entfernten Lage und trägt die Hüllfolie 18.

Durch das nun folgenden Zusammenfahren von Matrize 2 und Patrize 1 wird zunächst wieder die in Fig. 3 dargestellte Lage und schließlich die in Fig. 2 dargestellte Lage erreicht, wonach der Herstellungszyklus für den nächsten Becher 5 von neuem beginnt.

In Fig. 5 ist der Schwenkarm 30, sowie die Antriebseinheit für der Schwenkarm 30 mit der Kurvenscheibe 12, dem Laufrad 13, dem Zahnstangenkörper 14 und dem Zahnrad 16 dargestellt. Mittels der Antriebseinheit wird der Saughaltedorn 3 in der oben beschriebenen Weise in den Zwischenraum 6 eingeschwenkt bzw. aus diesem herausgeschwenkt.

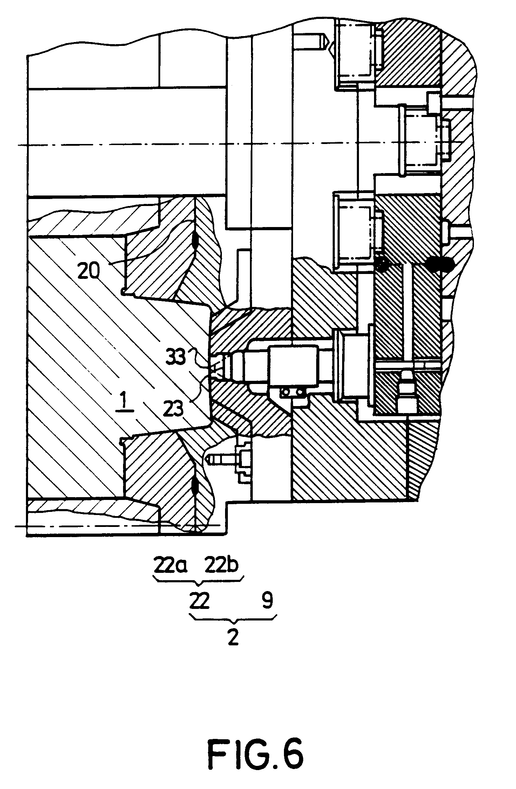

Fig. 6 zeigt die Spritzdüse 23 in detaillierter Darstellung, welche dazu geeignet ist, die Kunststoffschmelze durch eine Öffnung 33 im Basisteil 9 in Form des Matrizenbodens in die Matrize 2 einzuspritzen. In Fig. 6 ist diejenige Lage dargestellt, in welcher die Matrize 2 vollständig in die Patrize 1 eingefahren ist, d.h. in welcher die Spritzgußform geschlossen ist. Es ist auch möglich, eine Vielzahl von Spritzgießvorrichtungen symmetrisch zueinander, in Reihe hintereinander und zusätzlich übereinander anzuordnen, so daß mit einem einzigen Arbeitszyklus eine Vielzahl von Bechern 5 herstellbar ist.

## Patentansprüche

1. Spritzgießverfahren zum Herstellen eines Kunststoffbechers (5) mit einer nach dem Inmould-Labelling-Verfahren in diesen integrierten etikettförmigen Hüllfolie (18) mit folgenden Verfahrensschritten:
- Aufnehmen einer Hüllfolie (18) mittels eines Saughaltedorns (3) für das Einlegen der Hüllfolie (18) für einen nachfolgenden Spritzgießvorgang in eine Matrize (2);
- Öffnen einer Spritzgußform durch Auseinanderfahren der Matrize (2) und einer Patrize (1) in eine Öffnungsstellung, wobei während der Öffnungsbewegung ein gesteuerter Positionierarm (30) den Saughaltedorn (3) in eine Lage koaxial zu der Patrize (1) und Matrize (2) in einen durch Auseinanderfahren der Patrize (1) und Matrize (2) dazwischen entstehenden Zwischenraum (6) hineinbewegt;
- Abnehmen des zuvor hergestellten Kunststoffbechers (5) von der Patrize (1);
- Einlegen der Hüllfolie (18) von dem Saughaltedorn (3) in die Matrize (2);
- koaxiales Ineinanderbewegen der Patrize (1) und der Matrize (2) bis zum erneuten Ausbilden einer geschlossenen Spritzgußform, wobei durch die Schließbewegung der gesteuerte Positionierarm (30) den Saughaltedorn (3) aus dem aufgrund der Schließbewegung verschwindenden Zwischenraum (6) zwischen der Patrize (1) und Matrize (2) herausbewegt;
- Einspritzen von Kunststoffschmelze in die geschlossene Spritzgußform,
dadurch gekennzeichnet, daß
für das Einlegen der Hüllfolie (18) zumindest ein Teil (22) der Matrize (2) aus deren Öffnungsstellung in Richtung des Saughaltedorns (3) koaxial zu diesem vorbewegt wird, die Hüllfolie (18) von dem Saughaltedorn (3) in den vorbewegten Teil (22) der Matrize (2) eingelegt wird, und der vorbewegte Teil (22) der Matrize (2) wieder in deren Öffnungsstellung zurückbewegt wird.

2. Spritzgießverfahren nach Anspruch 1, dadurch gekennzeichnet, daß für das Aufnehmen der Hüllfolie (18) der vorbewegte Teil (22) der Matrize (2) zumindest über einen Teilbereich des Saughaltedorns (3) geschoben wird.

3. Spritzgießverfahren nach Anspruch 1 oder 2, dadurch gekennzeichnet, daß die Hüllfolie (18) von dem Saughaltedorn (3) in den vorbewegten Teil (22) der Matrize (2) durch Abblasen von dem Saughaltedorn (3) abgegeben wird und von der Matrize (2) durch Anlegen eines Unterdrucks auf der Innenoberfläche des vorbewegten Teils (22) der Matrize (2) aufgenommen und gehalten wird.

4. Spritzgießverfahren nach Anspruch 3, dadurch gekennzeichnet, daß der Unterdruck auf der Innenoberfläche des vorbewegten Teils der Matrize (2) über einen den vorbewegten Teil (22) der Matrize (2) in zwei Hälften (22a, 22b) teilenden und im wesentlichen quer zur Bewegungsrichtung des vorbewegten Teils (22) verlaufenden Saugspalt (20) angelegt wird, wobei die beiden Hälften (22a, 22b) bei unbelastetem vorbewegtem Teil (22) der Matrize (2) durch eine Federkraft für das Öffnen des Saugspalts (20) auseinandergetrieben werden und bei geschlossener Spritzgußform durch Aufbringen einer Schließkraft auf die Matrize (2) gegen die Federkraft zusammengedrückt werden, wodurch der Saugspalt (20) wieder geschlossen wird.

5. Spritzgießverfahren nach einem der Ansprüche 1 bis 4, dadurch gekennzeichnet, daß der Saughaltedorn (3) als Kombistempel ausgebildet ist und auch zur Abnahme des fertiggespritzten Bechers (5) verwendet wird, wenn sich der Saughaltedorn (3) in koaxialer Lage zu der Patrize (1) und zu der Matrize (2) befindet.

6. Spritzgießverfahren nach Anspruch 5, dadurch gekennzeichnet, daß der auf der Patrize (1) befindliche, soeben hergestellte Kunststoffbecher (5) an den in die koaxiale Lage zu der Patrize (1) hineinbewegten Saughaltedorn (3) durch Abblasen des Kunststoffbechers (5) von der Patrize (1) in Richtung des Saughaltedorns (3) abgegeben wird und von dem Saughaltedorn (3) durch einen auf einer Teiloberfläche desselben angelegten Unterdruck aufgenommen wird, wobei der Unterdruck auf den Boden des soeben hergestellten Kunststoffbechers (5) einwirkt.

7. Spritzgießverfahren nach Anspruch 6, dadurch gekennzeichnet, daß der soeben hergestellte Kunststoffbecher (5) schließlich von dem Saughaltedorn (3) in der vollständig aus dem Zwischenraum (6) zwischen Matrize (2) und Patrize (1) herausbewegten Lage des Positionierarms (30) durch Abblasen ausgegeben wird.

8. Spritzgießverfahren nach einem der Ansprüche 1 bis 7, dadurch gekennzeichnet, daß die Patrize (1) stets ortsfest ist und die Matrize (2) auf die Patrize (1) zu bzw. von dieser wegbewegt wird.

9. Spritzgießverfahren nach einem der Ansprüche 1 bis 8, dadurch gekennzeichnet, daß der Saughaltedorn (3) durch eine über die Öffnung- und Schließbewegung zwangsgesteuerte Schwenkbewegung in die der Patrize (1) und Matrize (2) koaxiale Lage ein- bzw. ausgeschwenkt wird.

10. Spritzgießvorrichtung zum Durchführen des Spritzgießverfahrens nach einem der Ansprüche 1 bis 9, mit einer Patrize (1) und einer koaxial zur Ausbildung einer geschlossenen Spritzgußform über die Patrize (1) bewegbaren Matrize (2); mit einer Spritzdüse (23) für das Einspritzen von Kunststoffschmelze in die geschlossene Spritzgußform, mit einem einen Saughaltedorn (3) tragenden Positionierarm (30), wobei der Saughaltedorn (3) einen für das Einlegen der Hüllfolie (18) in die Matrize (2) ausgebildeten Einlegeteil (8) aufweist, wobei die Matrize (2) und der Einlegeteil (8) jeweils mit einer für das Festhalten der Hüllfolie (18) ausgebildeten Halteeinrichtung versehen sind; einer für das Zusammenbewegen und Auseinanderbewegen der Patrize (1) und Matrize (2) ausgebildeten Antriebseinrichtung; einer Antriebseinrichtung mit einer Steuerung für das gesteuerte Hinein- und Herausbewegen des Positionierarms (30) in einen durch Auseinander- bzw. Zusammenbewegen von Matrize (2) und Patrize (1) entstehenden bzw. verschwindenden Zwischenraum (6), dadurch gekennzeichnet, daß die Matrize (2) in mindestens zwei Teile (9,22) teilbar ist, wovon mindestens ein vorbewegbarer Teil (22) längs einer Führung koaxial in Richtung zu der Patrize (1) zu dem Saughaltedorn (3) hin und wieder zurück in die Öffnungsstellung der Matrize (2) schiebbar ist, während der Saughaltedorn (3) in seiner der Matrize (2) und Patrize (1) koaxialen Lage verbleibt.

11. Spritzgießvorrichtung nach Anspruch 10, dadurch gekennzeichnet, daß der Positionierarm (30) ein Schwenkarm ist, der an seinem einen Ende um eine Schwenkachse (24) schwenkbar gelagert ist und an seinem anderen, freien Ende den Saughaltedorn (3) trägt.

12. Spritzgießvorrichtung nach Anspruch 11, dadurch gekennzeichnet, daß die Antriebseinrichtung mit der Steuerung für den Positionierarm (30) eine durch das Zusammenbewegen und Auseinanderbewegen der Patrize (1) und Matrize (2) mitbewegte Kurvenscheibe (12) ist, welche mit einem Laufrad (13) zusammenwirkt, das mit einer Zahnstange (14) verbunden ist, die ihrerseits mit einem Zahnrad (16) kämmt, welches seinerseits mit dem Positionierarm (30) starr verbunden und mit diesem zusammen um die Schwenkachse (24) des Positionierarms (30) drehbar ist.

13. Spritzgießvorrichtung nach einem der Ansprüche 10 bis 12, dadurch gekennzeichnet, daß der Saughaltedorn (3) ein Kombistempel ist, der einen für die Entnahme eines soeben hergestellten Kunststoffbechers (5) ausgebildeten Entnahmeteil (7) und einen für das Einlegen der Hüllfolie (18) in die Matrize (2) ausgebildeten Einlegeteil (8) aufweist, wobei der Entnahmeteil (7) und der Einlegeteil (8) koaxial aneinander befestigt sind.

14. Spritzgießvorrichtung nach Anspruch 13, dadurch gekennzeichnet, daß die Halteeinrichtungen für den Kunststoffbecher (5) an der Patrizenoberfläche bzw. der Entnahmeteiloberfläche des Saughaltedorns (3) ausmündende Öffnungen (29 bzw. 21) sind, die mit einer Unterdruckquelle verbunden sind.

15. Spritzgießvorrichtung nach einem der Ansprüche 10 bis 14, dadurch gekennzeichnet, daß die Patrize (1) ortsfest mit einem Gestell (11) der Spritzgießvorrichtung verbunden ist und die Antriebseinrichtung für das Zusammenbewegen und Auseinanderbewegen der Matrize (2) und Patrize (1) derart ausgebildet ist, daß mittels dieser Antriebseinrichtung die Matrize (2) auf die Patrize (1) zubewegbar ist.

16. Spritzgießvorrichtung nach einem der Ansprüche 10 bis 15, dadurch gekennzeichnet, daß der vorbewegbare Teil (22) der Matrize (2) längs eines im wesentlichen quer zur Bewegungsrichtung der Matrize (2) verlaufenden Saugspalts (20) in zwei Hälften (22a,22b) geteilt ist, wobei in dem Saugspalt (20) ein Federelement (35) angeordnet ist, welches im unbelasteten Zustand der Matrize (2) die beiden Hälften (22a,22b) des vorbewegbaren Teils (22) auseinandertreibt und den Saugspalt (20) so öffnet.

17. Spritzgießvorrichtung nach Anspruch 16, dadurch gekennzeichnet, daß das Federelement (35) ein O-Ring ist, welcher in einer entsprechenden, in beiden Hälften (22a,22b) des vorbewegbaren Teils der Matrize (2) ausgebildeten Ringnut aufgenommen ist, wobei die Ringnut eine derartige Größe aufweist, daß bei vollständig geschlossener Spritzgußform und damit einhergehendem vollständigem Aufeinanderpressen der beiden Hälften (22a, 22b) der O-Ring in der Ringnut Platz findet.

## Claims

1. Injection-moulding process for producing a plastic pot (5) having a label-shaped enveloping film (18) integrated into it by the in mould-labelling process, with the following process steps:
- receiving of an enveloping film (18) by means of a suction holding mandrel (3) for the insertion of the enveloping film (18) for a subsequent injection-moulding operation into a cavity plate (2);
- opening of an injection mould by moving apart the cavity plate (2) and a core plate (1) into an open position, a controlled positioning arm (30) moving the suction holding mandrel (3) during the opening movement into a position coaxial with respect to the core plate (1) and cavity plate (2), into an intermediate space (6) produced between the core plate (1) and cavity plate (2) by moving them apart;
- removing of the previously produced plastic pot (5) from the core plate (1);
- inserting of the enveloping film (18) from the suction holding mandrel (3) into the cavity plate (2);
- coaxial moving of the core plate (1) and the cavity plate (2), one into the other, until the renewed forming of a closed injection mould, the closing movement causing the controlled positioning arm (30) to move the suction holding mandrel (3) out from the intermediate space (6) between the core plate (1) and cavity plate (2), the said space diminishing on account of the closing movement;
- injecting of polymer melt into the closed injection mould,
characterized in that
for the insertion of the enveloping film (18), at least one part (22) of the cavity plate (2) is moved forward out of the opening position of the latter in the direction of the suction holding mandrel (3) coaxially with respect to the latter, the enveloping film (18) is inserted from the suction holding mandrel (3) into the moved-forward part (22) of the cavity plate (2), and the moved-forward part (22) of the cavity plate (2) being moved back again into the opening position of the latter.

2. Injection-moulding process according to Claim 1, characterized in that, for the receiving of the enveloping film (18), the moved-forward part (22) of the cavity plate (2) is pushed at least over a partial region of the suction holding mandrel (3).

3. Injection-moulding process according to Claim 1 or 2, characterized in that the enveloping film (18) is transferred from the suction holding mandrel (3) into the moved-forward part (22) of the cavity plate (2) by blowing off from the suction holding mandrel (3) and is received by the cavity plate (2) and held by applying a vacuum on the inner surface of the moved-forward part (22) of the cavity plate (2).

4. Injection-moulding process according to Claim 3, characterized in that the vacuum on the inner surface of the moved-forward part of the cavity plate (2) is applied via a suction gap (20) dividing the moved-forward part (22) of the cavity plate (2) into two halves (22a, 22b) and running substantially transversely with respect to the direction of movement of the moved-forward part (22), the two halves (22a, 22b) being driven apart by a spring force for the opening of the suction gap (20) when the moved-forward part (22) of the cavity plate (2) is in the unloaded state and being pressed together against the spring force when the injection mould is closed, by applying a closing force to the cavity plate (2), as a result of which the suction gap (20) is closed again.

5. Injection-moulding process according to one of Claims 1 to 4, characterized in that the suction holding mandrel (3) is designed as a dual-purpose core and is also used for removing the finished moulded pot (5) when the suction holding mandrel (3) is in a coaxial position with respect to the core plate (1) and with respect to the cavity plate (2).

6. Injection-moulding process according to Claim 5, characterized in that the plastic pot (5) just produced, located on the core plate (1), is transferred onto the suction holding mandrel (3), which has been moved into the coaxial position with respect to the core plate (1), by blowing off the plastic pot (5) from the core plate (1) in the direction of the suction holding mandrel (3) and is received by the suction holding mandrel (3) by means of a vacuum applied on a partial surface of the same, the vacuum acting on the bottom of the plastic pot (5) just produced.

7. Injection-moulding process according to Claim 6, characterized in that the plastic pot (5) just produced is finally released from the suction holding mandrel (3), by blowing off, in the position of the positioning arm (30) moved out completely from the intermediate space (6) between cavity plate (2) and core plate (1).

8. Injection-moulding process according to one of Claims 1 to 7, characterized in that the core plate (1) is always fixed in place and the cavity plate (2) is moved towards and away from the core plate (1).

9. Injection-moulding process according to one of Claims 1 to 8, characterized in that the suction holding mandrel (3) is swivelled into and out of the position coaxial with respect to the core plate (1) and cavity plate (2) by a swivelling movement positively controlled via the opening and closing movement.

10. Injection-moulding apparatus for carrying out the injection-moulding process according to one of Claims 1 to 9, having a core plate (1) and a cavity plate (2) which can be moved coaxially for forming a closed injection mould over the core plate (1); having an injection nozzle (23) for the injecting of polymer melt into the closed injection mould, having a positioning arm (30), bearing a suction holding mandrel (3), the suction holding mandrel (3) having an insertion part (8), designed for the insertion of the enveloping film (18) into the cavity plate (2), the cavity plate (2) and the insertion part (8) being respectively provided with a holding device designed for securely holding the enveloping film (18); a driving device designed for the moving together and moving apart of the core plate (1) and cavity plate (2); a driving device with a control means for the controlled moving in and out of the positioning arm (30) into an intermediate space (6) produced by moving apart and diminished by moving together of the cavity plate (2) and core plate (1), characterized in that the cavity plate (2) can be divided into at least two parts (9,22), of which at least one part (22), which can be moved forward, is such that it can be slid along a guide coaxially in the direction of the core plate (1) towards the suction holding mandrel (3) and back again into the opening position of the cavity plate (2), while the suction holding mandrel (3) remains in its position coaxial with respect to the cavity plate (2) and core plate (1).

11. Injection-moulding apparatus according to Claim 10, characterized in that the positioning arm (30) is a swivel arm, which at its one end is swivel-mounted about a swivel axis (24) and at its other, free end bears the suction holding mandrel (3).

12. Injection-moulding apparatus according to Claim 11, characterized in that the driving device with the control means for the positioning arm (30) is a cam plate (12) which is moved along by the moving together and moving apart of the core plate (1) and cavity plate (2) and interacts with a running wheel (13), which is connected to a rack (14), which for its part meshes with a gearwheel (16), which for its part is rigidly connected to the positioning arm (30) and can be turned together with the latter about the swivel axis (24) of the positioning arm (30).

13. Injection-moulding apparatus according to one of Claims 10 to 12, characterized in that the suction holding mandrel (3) is a dual-purpose core, which has a removal part (7), designed for the removal of a plastic pot (5) just produced, and an insertion part (8), designed for the insertion of the enveloping film (18) into the cavity plate (2), the removal part (7) and the insertion part (8) being fastened coaxially to each other.

14. Injection-moulding apparatus according to Claim 13, characterized in that the holding devices for the plastic pot (5) are openings (29 and 21, respectively) which open out respectively on the surface of the core plate and the surface of the removal part of the suction holding mandrel (3) and are connected to a vacuum source.

15. Injection-moulding apparatus according to one of Claims 10 to 14, characterized in that the core plate (1) is connected fixedly in place to a frame (11) of the injection-moulding apparatus and the driving device for the moving together and moving apart of the cavity plate (2) and core plate (1) is designed in such a way that the cavity plate (2) can be moved towards the core plate (1) by means of this driving device.

16. Injection-moulding apparatus according to one of Claims 10 to 15, characterized in that the part (22) of the cavity plate (2) which can be moved forward is divided into two halves (22a,22b) along a suction gap (20) running substantially transversely with respect to the direction of movement of the cavity plate (2), there being arranged in the suction gap (20) a spring element (35) which, in the unloaded state of the cavity plate (2), drives apart the two halves (22a,22b) of the part (22) which can be moved forward and thus opens the suction gap (20).

17. Injection-moulding apparatus according to Claim 16, characterized in that the spring element (35) is an O-ring, which is accommodated in a corresponding annular groove formed in the two halves (22a,22b) of the part of the cavity plate (2) which can be moved forward, the annular groove being of such a size that, when the injection mould is completely closed and as a consequence the two halves (22a, 22b) are pressed completely onto each other, the O-ring finds space in the annular groove.

## Revendications

1. Procédé de moulage par injection, pour la fabrication d'un pot (5) ou gobelet, en matière plastique, avec une feuille-enveloppe (18), en forme d'étiquette, intégrée dans ledit pot selon le procédé inmould-labelling, présentant les étapes ci-après :
- réception d'une feuille-enveloppe (18) au moyen d'un mandrin de maintien par aspiration (3), pour l'insertion de la feuille-enveloppe (18), pour effectuer un processus de moulage par injection subséquent dans la partie femelle (2) d'un moule ;
- ouverture du moule d'injection, par écartement de la partie femelle (2) et de la partie mâle (1) du moule, en une position d'ouverture, où, pendant le mouvement d'ouverture, un bras de positionnement (30) commandé se place dans une position coaxiale par rapport à la partie mâle (1) et à la partie femelle (2), en pénétrant dans un espace intermédiaire (6) créé entre la partie mâle (1) et la partie femelle (2), du fait de leur séparation;
- enlèvement de la partie mâle (1) du pot en matière plastique (5) fabriqué auparavant;
- insertion de la feuille-enveloppe (18) dans la partie femelle (2) par le mandrin de maintien par aspiration (3) ;
- imbrication coaxiale de la partie mâle (1) et de la partie femelle (2) jusqu'à reconstitution d'un moule d'injection fermé, où, suite au déplacement de fermeture du bras de positionnement (30) commandé, le mandrin de maintien par aspiration (3) est sorti de l'espace intermédiaire (6) constitué entre la partie mâle (1) et la partie femelle (2), cet espace disparaissant du fait du mouvement de fermeture;
- injection de la matière plastique en fusion dans le moule d'injection fermé,
caractérisé en ce que
pour l'insertion de la feuille-enveloppe (18), au moins une partie (22) de la partie femelle (2) est déplacée en avant, depuis sa position d'ouverture, dans la direction du mandrin de maintien par aspiration (3), coaxialement par rapport à celui-ci et devant lui, la feuille-enveloppe (18) étant insérée par le mandrin de maintien par aspiration (3) dans la partie avancée (22) de la partie femelle (2), et la partie avancée (22) de la partie femelle (2) étant ramenée dans sa position d'ouverture.

2. Procédé de moulage par injection selon la revendication 1, caractérisé en ce que, pour recevoir la feuille-enveloppe (18), la partie avancée (22) de la partie femelle (2) est coulissée au moins sur une partie du mandrin de maintien par aspiration (3).

3. Procédé de moulage par injection selon la revendication 1 ou 2, caractérisé en ce que la feuille-enveloppe (18) est enlevée du mandrin de maintien par aspiration (3), dans la partie avancée (22) de la partie femelle (2), par soufflage par le mandrin de maintien par aspiration (3), et est supportée et maintenue par la partie femelle (2), par application d'une dépression sur la surface intérieure de la partie avancée (22) de la partie femelle (2).

4. Procédé de moulage par injection selon la revendication 3, caractérisé en ce que la dépression régnant sur la surface intérieure de la partie femelle (2) est appliquée par l'intermédiaire d'un interstice d'aspiration (20), divisant en deux moitiés (22a, 22b) la partie avancée (22) de la partie femelle (2) et courant sensiblement transversalement par rapport à la direction de déplacement de la partie avancée (22), les deux moitiés (22a, 22b), étant écartées à l'aide de la force d'un ressort pour provoquer l'ouverture de l'interstice d'aspiration (20), lorsque la partie avancée (22) de la partie femelle (2) n'est pas chargée, et, lorsque le moule d'injection est fermé, elles sont regroupées par pressage par application d'une force de fermeture sur la partie femelle (2), force agissant à l'encontre de la force du ressort, faisant que l'interstice d'aspiration (20) est refermé.

5. Procédé de moulage par injection selon l'une des revendications 1 à 4, caractérisé en ce que le mandrin de maintien par aspiration (3) est réalisé sous forme d'un poinçon à fonctions multiples et est utilisé également pour l'enlèvement du pot à l'état fini après injection (5), lorsque le mandrin de maintien par aspiration (3) se trouve en position coaxiale par rapport à la partie mâle (1) et à la partie femelle (2).

6. Procédé de moulage par injection selon la revendication 5, caractérisé en ce que le pot en matière plastique (5), venant d'être fabriqué et se trouvant sur la partie mâle (1) du moule, est enlevé du mandrin de maintien par aspiration (3) qui a été introduit dans une position coaxiale par rapport à la partie mâle (1), par soufflage d'éjection du pot en matière plastique (5) vis-à-vis de la partie mâle (1), dans la direction du mandrin de maintien par aspiration (3), le pot étant supporté par le mandrin de maintien par aspiration (3), par une dépression appliquée sur une surface partielle de celui-ci, la dépression agissant sur le fond du pot en matière plastique (5) venant d'être fabriqué.

7. Procédé de moulage par injection selon la revendication 6, caractérisé en ce que le pot en matière plastique (5) venant d'être fabriqué est enfin sorti, par soufflage d'éjection, par le mandrin de maintien par aspiration (3), dans la position complètement sortie du bras de positionnement (30), hors de l'espace intermédiaire (6) créé entre la partie femelle (2) et la partie mâle (1) du moule.

8. Procédé de moulage par injection selon l'une des revendications 1 à 7, caractérisé en ce que la partie mâle (1) est toujours localement fixe et la partie femelle (2) est déplacée en un mouvement de rapprochement ou d'écartement vis-à-vis de la partie mâle (1).

9. Procédé de moulage par injection selon l'une des revendications 1 à 8, caractérisé en ce que le mandrin de maintien par aspiration (3) est introduit ou sorti par pivotement, au moyen d'un mouvement de pivotement à commande forcée, pour effectuer un mouvement d'ouverture et de fermeture orienté dans la position coaxiale de la partie mâle (1) et de la partie femelle (2).

10. Dispositif de moulage par injection pour mettre en oeuvre le procédé de moulage par injection selon l'une des revendications 1 à 9, comprenant :
- une partie mâle (1) et une partie femelle (2) déplaçable coaxialement pour constituer un moule d'injection fermé sur la partie mâle (1) ;
- une buse d'injection (23) destinée à injecter de la matière plastique fondue dans le moule d'injection fermé, avec un bras de positionnement (30) portant un mandrin de maintien par aspiration (3), le mandrin de maintien par aspiration (3) présentant une partie d'insertion (8) conçue pour l'insertion de la feuille-enveloppe (18) dans la partie femelle (2), la partie femelle (2) et la partie d'insertion (8) étant chacune pourvues d'un dispositif de maintien réalisé pour maintenir fermement la feuille-enveloppe (18) ;
- un dispositif d'entraînement réalisé pour rapprocher et écarter la partie mâle (1) et la partie femelle (2) ;
- un dispositif d'entraînement comportant une commande pour effectuer un mouvement commandé de pénétration et de sortie du bras de positionnement (30) dans un espace intermédiaire (6) qui est créé ou annulé respectivement par l'écartement ou le rapprochement entre la partie femelle (2) et la partie mâle (1),
caractérisé en ce que
la partie femelle (2) est susceptible d'être divisée en au moins deux parties (9, 22), dont au moins une partie (22), pouvant être avancée, peut être coulissée le long d'un guide, en une direction coaxiale par rapport à la partie mâle (1), vers le mandrin de maintien par aspiration (3) et revenir dans la position d'ouverture de la partie femelle (2), tandis que le mandrin de maintien par aspiration (3) reste dans sa position coaxiale par rapport à la partie femelle (2) et à la partie mâle (1).

11. Dispositif de moulage par injection selon la revendication 10, caractérisé en ce que le bras de positionnement (30) est un bras pivotant, qui est monté pivotant à une de ses extrémités, autour d'un axe de pivotement (24), et porte à son autre extrémité libre le mandrin de maintien par aspiration (3).

12. Dispositif de moulage par injection selon la revendication 11, caractérisé en ce que le dispositif d'entraînement comportant la commande destinée au bras de positionnement (30) est un disque à came (12) entraîné conjointement par le déplacement de rapprochement et d'écartement entre la partie mâle (1) et la partie femelle (2), le disque à came (12) coopérant avec une roue tournante (13) reliée à une crémaillère (14) qui s'engrène, de son côté, avec un pignon (16) qui, de son côté, est relié rigidement au bras de positionnement (30) et est susceptible de tourner avec celui-ci conjointement autour de l'axe de pivotement (24) du bras de positionnement (30).

13. Dispositif de moulage par injection selon l'une des revendications 10 à 12, caractérisé en ce que la mandrin de maintien par aspiration (3) est un poinçon à fonctions multiples qui présente une partie de prélèvement (7) assurant le prélèvement d'un pot en matière plastique (5) venant d'être fabriqué et une partie d'insertion (8) assurant l'insertion de la feuille-enveloppe (18) dans la partie femelle (2), la partie de prélèvement (7) et la partie d'insertion (8) étant fixées l'une à l'autre coaxialement.

14. Dispositif de moulage par injection selon la revendication 13, caractérisé en ce que les dispositifs de maintien destinés au pot en matière plastique (5) sont des ouvertures (29, respectivement 21), débouchant sur la surface de poinçon ou la surface de partie de prélèvement du mandrin de maintien par aspiration (3) et reliées à une source de vide.

15. Dispositif de moulage par injection selon l'une des revendications 10 à 14, caractérisé en ce que la partie mâle (1) est reliée localement de façon fixe à un bâti (11) du dispositif de moulage par injection et le dispositif d'entraînement, destiné au déplacement de rapprochement et d'écartement entre la partie femelle (2) et la partie mâle (1), est réalisé de manière que la partie femelle (2) puisse être déplacée en direction de la partie mâle (1) au moyen de ce dispositif d'entraînement.

16. Dispositif de moulage par injection selon l'une des revendications 10 à 15, caractérisé en ce que la partie avancée (22) de la partie femelle (2) est subdivisée en deux moitiés (22a, 22b) le long d'un interstice d'aspiration (20) courant sensiblement transversalement par rapport à la direction de déplacement de la partie femelle (2), un élément élastique (35) écartant les deux moitiés (22a, 22b) de la partie (22) pouvant être avancée et ouvrant ainsi l'interstice d'aspiration (20) lorsque la partie femelle (2) se trouve à l'état non chargé, cet élément élastique (35) étant disposé dans l'interstice d'aspiration (20).

17. Dispositif de moulage par injection selon la revendication 16, caractérisé en ce que l'élément élastique (35) est un élément torique qui est logé dans une gorge annulaire correspondante, réalisée dans les deux moitiés (22a, 22b) de la partie pouvant être avancée de la partie femelle (2), la gorge annulaire ayant une taille telle que, lorsque le moule de coulée par injection est complètement fermé et qu'ainsi les deux moitiés (22a, 22b) sont complètement pressées de ce fait l'une contre l'autre, l'élément torique prend place dans la gorge annulaire.
